# FASCICULE DE BREVET EUROPEEN

(11) **EP 3 560 827 B1**
(45) Date de publication et mention de la délivrance du brevet: **01.06.2022**
(21) Numéro de dépôt: 19170692.8
(22) Date de dépôt: 23.04.2019
(51) Int. Cl.: B64C 25/40, B64D 45/02

(54) **ATTERRISEUR POURVU D'UN DISPOSITIF PARE-FOUDRE**
FAHRWERK UMFASSEND EINE BLITZSCHUTZEINRICHTUNG
UNDERCARRIAGE PROVIDED WITH A LITHGNING PROTECTION DEVICE

(30) Priorité: 26.04.2018 FR 1853668
(43) Date de publication de la demande: 30.10.2019
(73) Titulaire: Safran Landing Systems, 78140 Vélizy-Villacoublay (FR)
(72) Inventeur: GUI, Jérôme, 92130 Issy les Moulineaux (FR); AVENET, Alexandre, 31100 Toulouse (FR); PIZANA, Pierre, 77550 MOISSY-CRAMAYEL (FR); SERIGNAC, Yvain, 77550 MOISSY-CRAMAYEL (FR)
(74) Mandataire: Lavialle, Bruno François Stéphane

(56) Documents cités:
- EP-A2- 2 735 850
- EP-A2- 3 269 524
- WO-A2-2005/096721

## Description

La présente invention concerne le domaine de l'aéronautique et plus particulièrement les atterrisseurs d'aéronefs.

### ETAT DE LA TECHNIQUE

Le risque de foudroiement d'aéronef étant assez élevé, les aéronefs comprennent un certain nombre de moyens permettant de limiter les conséquences d'un impact de foudre. Les éléments structuraux de l'aéronef sont donc reliés à la masse de l'aéronef et les équipements susceptibles d'être foudroyés sont protégés par des paratonnerres. Les équipements actuellement installés sur les trains d'atterrissage ne sont pas menacés de sorte qu'il n'est pas prévu une quelconque protection contre la foudre.

Par ailleurs, il existe depuis quelques années une volonté de réduction de la consommation de carburant et de la pollution produite par les moteurs d'avions. Pour atteindre cet objectif, des solutions alternatives ont été imaginées et développées pour déplacer les avions au sol sans l'aide des moteurs principaux qui sont gourmands en kérosène. L'un des concepts repose sur la fixation d'un motoréducteur électrique sur la jambe d'au moins l'un des atterrisseurs pour permettre à l'avion de se déplacer de manière autonome au sol sans recourir à ses moteurs principaux.

Il apparaît que le motoréducteur comporte des parties suffisamment écartées de la jambe de l'atterrisseur pour favoriser un effet de pointe de sorte que lesdites parties constitueraient des zones privilégiées d'impact de la foudre. Un tel foudroiement pourrait entraîner la destruction du motoréducteur et la transmission de forts courants et de hautes tensions vers les appareils électriques et/ou électroniques auxquels le motoréducteur est relié. Un risque d'incendie au niveau du fuselage n'est pas non plus à exclure.

Il a été envisagé de dimensionner le blindage de l'ensemble du faisceau électrique de l'atterrisseur pour supporter l'onde de foudre. Cependant, quand bien même le blindage résisterait à l'onde de foudre, les courants induits par l'onde de foudre dans les conducteurs du faisceau électrique seraient encore trop importants pour les circuits électroniques de commande et notamment les calculateurs.

Il a également été envisagé de placer un paratonnerre sur l'atterrisseur, malheureusement les contraintes d'encombrement qui s'exercent dans cette zone de l'aéronef, en particulier lorsque le train est rentré dans sa soute, rendent très complexe la mise en place d'un tel paratonnerre.

EP 2 735 850 A2 décrit une partie basse d'un atterrisseur d'aéronef comprenant un capteur agencé à l'intérieur d'une extrémité libre d'un essieu. Des doigts conducteurs s'étendent radialement depuis le capteur et sont en contact avec une surface interne de l'essieu pour former un chemin de faible impédance entre l'essieu et le capteur afin d'éviter la formation d'arc électriques dommageables dus par exemple à un foudroiement au niveau du nez de l'aéronef.

### OBJET DE L'INVENTION

Un but de l'invention est de fournir un moyen pour limiter le risque qu'un foudroiement n'altère durablement le fonctionnement d'un aéronef.

### BREF EXPOSE DE L'INVENTION

A cet effet, on prévoit, selon l'invention, un atterrisseur d'aéronef, comprenant un équipement électrique fixé à une partie de l'atterrisseur et un dispositif anti-foudre comportant au moins un bouclier fixé à ladite partie de l'atterrisseur par des moyens de fixation pour s'étendre en regard de l'équipement électrique en une position écartée de ce dernier. Le bouclier comprenant au moins une première plaque en matériau électriquement conducteur agencée pour absorber une majeure partie d'une énergie thermique engendrée par un passage d'une onde de foudre et pour évacuer les charges électriques de l'onde de foudre.

La première plaque est donc destinée à former le point d'entrée ou de sortie de l'onde de foudre et à évacuer le plus facilement possible les courants correspondants. La première phase de l'onde de foudre étant très puissante avec des fréquences très élevées, les courants ne rentrent pas dans la première plaque et circulent essentiellement à la surface de la première plaque. La seconde phase de l'onde de foudre est quant à elle très énergétique, les courants rentrent dans la plaque et la contrainte thermique est absorbée par la première plaque. La première plaque est de préférence en un matériau fusible à la température engendrée par le passage de l'onde de foudre de sorte qu'elle va fondre au moins en partie. La distance laissée entre la première plaque et l'équipement électrique permet de limiter le risque d'un échauffement excessif de l'équipement électrique.

De préférence, le dispositif anti-foudre comprend une deuxième plaque en matériau électriquement conducteur s'étendant parallèlement à la première plaque entre cette dernière et l'équipement électrique en une position écartée de l'équipement électrique et de la première plaque. Avantageusement, la première plaque est fixée sur la deuxième plaque qui forme une partie des moyens de fixation de la première plaque à ladite partie de l'atterrisseur, la deuxième plaque étant reliée à l'équipement électrique.

La deuxième plaque supporte la première plaque, assure la continuité des courants vers la structure de l'atterrisseur et constitue une seconde isolation thermique. Si la première plaque est en métal, la deuxième plaque bloque les éventuelles projections de métal en fusion provenant de la première plaque. L'équipement électrique est donc protégé des courants élevés, des projections de métal en fusion et de l'élévation de température localisée au point d'entrée ou de sortie de l'onde de foudre.

L'invention a également pour objet un aéronef équipé d'un tel atterrisseur.

D'autres caractéristiques et avantages de l'invention ressortiront à la lecture de la description qui suit de modes de réalisation particuliers non limitatifs de l'invention.

### BREVE DESCRIPTION DES FIGURES

Il sera fait référence aux dessins annexés, parmi lesquels :
- la figure 1 est une vue schématique en coupe transversale du dispositif anti-foudre selon l'invention ;
- la figure 2 est une vue schématique en perspective d'un atterrisseur selon l'invention

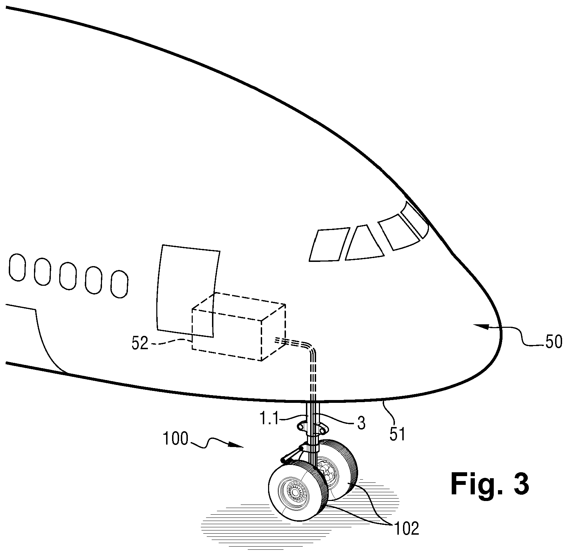

- la figure 3 est une vue schématique d'un aéronef équipé d'un tel atterrisseur.

### DESCRIPTION DETAILLEE DE L'INVENTION

En référence aux figures, l'invention est décrite en application à un aéronef 50 comportant un fuselage 51 contenant une unité électronique de commande 52 de l'aéronef 50. Le fuselage 51 comprend un nez pourvu d'un atterrisseur généralement désigné en 100.

L'atterrisseur 100 comprend une jambe 1 ayant une extrémité 1.1 articulée au fuselage 51 et une extrémité libre 1.2 pourvue de deux axes 101 pour recevoir chacun une roue 102. L'extrémité libre 1.2 est également pourvue d'un motoréducteur électrique 2 destiné à entraîner en rotation les roues 102 et relié par un faisceau 3 de câbles électriques à une source d'alimentation non représentée et à l'unité de commande 52. Le motoréducteur 2 est agencé pour engrener avec une roue dentée liée en rotation avec l'une des roues 102 de telle manière que le pilotage du motoréducteur 2 permette l'entraînement de la roue 102 en rotation lors des manœuvres de taxiage. Le faisceau 3 s'étend dans un chemin de câbles qui court le long de la jambe 1 de l'atterrisseur 100. L'atterrisseur 100 est connu en lui-même et ne sera pas plus détaillé ici. En particulier, les moyens de déploiement et rétraction de l'atterrisseur 100 ne sont pas représentés, de même que les moyens permettant d'engager le motoréducteur sur la roue dentée et de l'en dégager.

L'atterrisseur 100 comprend un dispositif anti-foudre, généralement désigné en 10, comportant plusieurs boucliers fixés à l'extrémité libre 1.2 de la jambe 1 de l'atterrisseur par des moyens de fixation de telle manière que les boucliers s'étendent en regard du motoréducteur 2 et du tronçon inférieur du faisceau 3. Chaque bouclier s'étend en une position écartée du motoréducteur 2 ou du tronçon inférieur du faisceau 3 en regard duquel il est positionné.

Chaque bouclier comprend une première plaque 11 et une deuxième plaque 12.

La première plaque 11 est en matériau électriquement conducteur et est agencée pour absorber une majeure partie d'une énergie thermique engendrée par un passage d'une onde de foudre et pour évacuer les charges électriques de l'onde de foudre. La première plaque 11 est en métal et a une épaisseur comprise entre 2 et 4 mm environ. Le métal de la première plaque 11 est ici un aluminium.

La deuxième plaque 12 est en matériau électriquement conducteur. La deuxième plaque 12 est en métal et a une épaisseur comprise entre 1 et 2 mm environ. Le métal de la deuxième plaque 12 est ici un aluminium ou un acier.

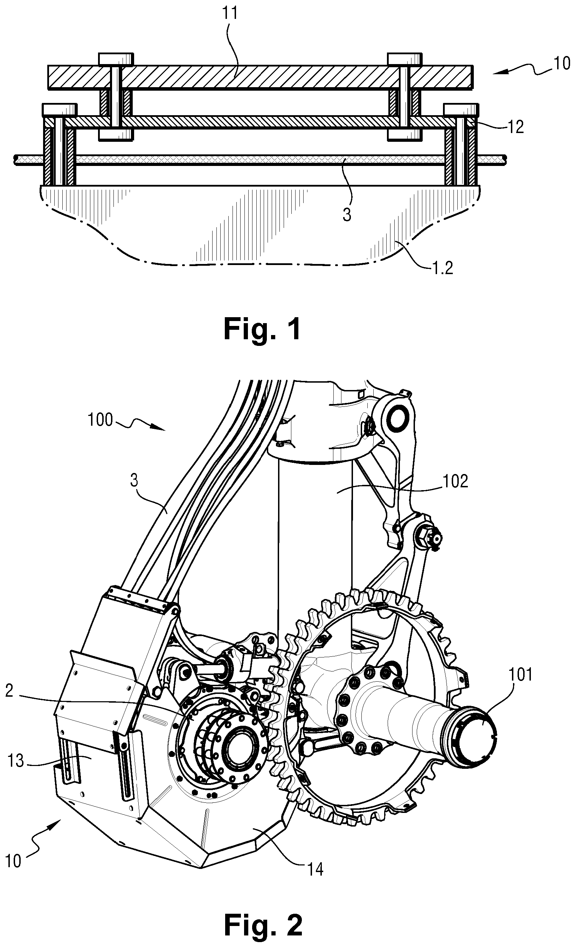

Sur la figure 1, on voit que la première plaque 11 est fixée par des colonnes sur la deuxième plaque 12 qui forme une partie des moyens de fixation de la première plaque 11 à l'extrémité libre 1.2 de la jambe 1 de l'atterrisseur. Ces colonnes sont formées chacune d'un boulon en acier ou en aluminium s'étendant dans une entretoise tubulaire qui est serrée entre les deux plaques pour les maintenir écartées les deux plaques l'une de l'autre. La deuxième plaque 12 s'étend parallèlement à la première plaque 11 entre cette dernière et le motoréducteur 2 et le faisceau 3 en une position écartée du motoréducteur 2 et du faisceau 3 et de la première plaque 11. La première plaque 11 est séparée de la deuxième plaque 12 d'une distance comprise entre 3 mm et 5 mm environ.

Les moyens de fixation des boucliers s'étendant en regard du faisceau 3 relient la deuxième plaque 12 au chemin de câbles par des colonnes. Ces colonnes sont formées chacune d'un boulon en acier ou en aluminium s'étendant dans une entretoise tubulaire maintenant écartés la deuxième plaque et le chemin de câbles.

Les moyens de fixation des boucliers s'étendant en regard du motoréducteur 2 comportent ici également deux parois latérales 13, 14 en matériau électriquement conducteur qui relient la deuxième plaque 12 à l'extrémité libre 1.2 et s'étendent de part et d'autre du motoréducteur 2 à distance de celui-ci.

Bien entendu, l'invention n'est pas limitée aux modes de réalisation décrits mais englobe toute variante entrant dans le champ de l'invention telle que définie par les revendications.

En particulier, le bouclier peut ne comprendre qu'une seule plaque, à savoir la première plaque. La première plaque aura alors une épaisseur plus importante pour pouvoir absorber l'énergie thermique engendrée par le passage de l'onde de foudre. Ceci est particulièrement important dans le cas où la première plaque est en métal : il faut éviter que la première plaque soit transpercée et que du métal en fusion soit projeté sur l'équipement électrique.

L'équipement électrique peut être tout élément conduisant l'électricité, un faisceau électrique, un actionneur électromagnétique ou électromécanique, un circuit de puissance ou un circuit de commande...

Les parois latérales 13, 14 peuvent être pourvues de lumières pour permettre une circulation d'air favorisant un refroidissement des équipements électriques.

Le bouclier peut être installé sur tout type de train et par exemple sur un train à deux rues ou sur un train bogie à quatre ou six roues.

L'actionneur et la liaison à la roue du dispositif de taxiage peuvent être réalisés différemment.

La première plaque est fixée sur la deuxième plaque qui forme une partie des moyens de fixation de la première plaque à ladite partie de l'atterrisseur. La fixation peut être réalisée par des éléments vissés, boulonnés, rivetés ou autre.

## Revendications

1. Atterrisseur d'aéronef, comprenant un équipement électrique (2, 3) fixé à une partie (1) de l'atterrisseur et un dispositif anti-foudre (10) comportant au moins un bouclier fixé à ladite partie (1) de l'atterrisseur par des moyens de fixation pour s'étendre en regard de l'équipement électrique (2, 3) en une position écartée de ce dernier, le bouclier comprenant au moins une première plaque (11) en matériau électriquement conducteur agencée pour absorber une majeure partie d'une énergie thermique engendrée par un passage d'une onde de foudre et pour évacuer les charges électriques de l'onde de foudre.

2. Atterrisseur selon la revendication 1, dans lequel le dispositif anti-foudre (10) comprend une deuxième plaque (12) en matériau électriquement conducteur s'étendant parallèlement à la première plaque (11) entre cette dernière et l'équipement électrique (2, 3) en une position écartée de l'équipement électrique (2, 3) et de la première plaque (11), la première plaque (11) étant fixée sur la deuxième plaque (12) qui forme une partie des moyens de fixation de la première plaque (11) à ladite partie (1) de l'atterrisseur, la deuxième plaque (12) étant reliée à l'équipement électrique.

3. Atterrisseur selon la revendication 2, dans lequel la première plaque (11) est séparée de la deuxième plaque (12) d'une distance comprise entre 3 mm et 10 mm environ et de préférence entre 3 mm et 5 mm.

4. Atterrisseur selon la revendication 2 ou la revendication 3, dans lequel la première plaque (11) est en métal et a une épaisseur comprise entre 2 et 4 mm environ.

5. Atterrisseur selon la revendication 4, dans lequel le métal de la première plaque (11) est un aluminium.

6. Atterrisseur selon l'une quelconque des revendications 2 à 5, dans lequel la deuxième plaque (12) est en métal et a une épaisseur comprise entre 1 et 4 mm environ et de préférence entre 1 mm et 2 mm.

7. Atterrisseur selon la revendication 6, dans lequel le métal de la deuxième plaque (12) est un aluminium.

8. Atterrisseur selon la revendication 6, dans lequel le métal de la deuxième plaque (12) est un acier.

9. Atterrisseur selon l'une quelconque des revendications précédentes, dans lequel l'équipement électrique est un faisceau électrique (3).

10. Atterrisseur selon l'une quelconque des revendications précédentes, dans lequel l'équipement électrique est un actionneur électromagnétique (2) tel qu'un motoréducteur.

11. Atterrisseur selon l'une quelconque des revendications 2 à 8, dans lequel les moyens de fixation comportent deux parois latérales (13, 14) en matériau électriquement conducteur qui s'étendent de part et d'autre de l'équipement électrique (2, 3) à distance de celui-ci et qui sont reliées à la deuxième plaque (12).

12. Aéronef comportant un fuselage contenant un poste de pilotage pourvue d'une unité électronique de commande, le fuselage étant pourvu d'au moins un atterrisseur selon l'une quelconque des revendications précédentes, l'équipement électrique de l'atterrisseur étant relié à l'unité électronique de commande.

## Patentansprüche

1. Luftfahrzeugfahrwerk, umfassend eine elektrische Ausrüstung (2, 3), die an einem Teil (1) des Fahrwerks befestigt ist, sowie eine Blitzschutzvorrichtung (10), die mindestens eine Abschirmung umfasst, die mittels Befestigungsmitteln an dem genannten Teil (1) des Fahrwerks befestigt ist, um sich gegenüber der elektrischen Ausrüstung (2, 3) in einer zu dieser letztgenannten beabstandeten Position zu erstrecken, wobei die Abschirmung mindestens eine erste Platte (11) aus elektrisch leitendem Material umfasst, die ausgebildet ist, um einen Hauptteil einer Wärmeenergie zu absorbieren, die von einem Durchlauf einer Blitzwelle erzeugt wird, und um die elektrischen Ladungen der Blitzwelle abzuleiten.

2. Fahrwerk nach Anspruch 1, bei dem die Blitzschutzvorrichtung (10) eine zweite Platte (12) aus elektrisch leitendem Material umfasst, die sich parallel zur ersten Platte (11) zwischen dieser letztgenannten und der elektrischen Ausrüstung (2, 3) in einer zur elektrischen Ausrüstung (2, 3) und zur ersten Platte (11) beabstandeten Position erstreckt, wobei die erste Platte (11) an der zweiten Platte (12) befestigt ist, die einen Teil der Befestigungsmittel zur Befestigung der ersten Platte (11) an dem genannten Teil (1) des Fahrwerks bildet, wobei die zweite Platte (12) mit der elektrischen Ausrüstung verbunden ist.

3. Fahrwerk nach Anspruch 2, bei dem die erste Platte (11) von der zweiten Platte (12) um einen Abstand zwischen ungefähr 3 mm und 10 mm und vorzugsweise zwischen 3 mm und 5 mm getrennt ist.

4. Fahrwerk nach Anspruch 2 oder Anspruch 3, bei dem die erste Platte (11) aus Metall ist und eine Dicke zwischen ungefähr 2 und 4 mm hat.

5. Fahrwerk nach Anspruch 4, bei dem das Metall der ersten Platte (11) Aluminium ist.

6. Fahrwerk nach einem der Ansprüche 2 bis 5, bei dem die zweite Platte (12) aus Metall ist und eine Dicke zwischen ungefähr 1 und 4 mm und vorzugsweise zwischen 1 mm und 2 mm hat.

7. Fahrwerk nach Anspruch 6, bei dem das Metall der zweiten Platte (12) Aluminium ist.

8. Fahrwerk nach Anspruch 6, bei dem das Metall der zweiten Platte (12) Stahl ist.

9. Fahrwerk nach einem der vorhergehenden Ansprüche, bei dem die elektrische Ausrüstung ein Kabelstrang (3) ist.

10. Fahrwerk nach einem der vorhergehenden Ansprüche, bei dem die elektrische Ausrüstung ein elektromagnetischer Aktor (2) wie z. B. ein Getriebemotor ist.

11. Fahrwerk nach einem der Ansprüche 2 bis 8, bei dem die Befestigungsmittel zwei seitliche Wände (13, 14) aus elektrisch leitendem Material umfassen, die sich zu beiden Seiten der elektrischen Ausrüstung (2, 3) mit Abstand zu derselben erstrecken und die mit der zweiten Platte (12) verbunden sind.

12. Luftfahrzeug, umfassend einen Rumpf, der ein Cockpit enthält, das mit einer elektronischen Steuereinheit versehen ist, wobei der Rumpf mit mindestens einem Fahrwerk nach einem der vorhergehenden Ansprüche versehen ist, wobei die elektrische Ausrüstung des Fahrwerks mit der elektronischen Steuereinheit verbunden ist.

## Claims

1. An aircraft undercarriage including electrical equipment (2, 3) fastened to a portion (1) of the undercarriage and a lightning protection device (10) comprising at least one shield fastened to said portion (1) of the undercarriage by fastener means so as to extend in register with the electrical equipment (2, 3) in a position that is spaced apart therefrom, the shield comprising at least a first plate (11) made of electrically conductive material that is arranged to absorb a major portion of the heat energy that is generated by the passage of a lightning wave and to discharge the electric charge of the lightning wave.

2. An undercarriage according to claim 1, wherein the lightning protection device (10) further comprises a second plate (12) made of electrically conductive material extending parallel to the first plate (11) between the first plate and the electrical equipment (2, 3) in a position that is spaced apart from the electrical equipment (2, 3) and from the first plate (11), the first plate (11) being fastened on the second plate (12), which forms a portion of the means for fastening the first plate (11) to said portion (1) of the undercarriage, the second plate (12) being connected to the electrical equipment.

3. An undercarriage according to claim 2, wherein the first plate (11) is spaced apart from the second plate (12) by a distance lying in the range 3 mm to 10 mm approximately, and preferably in the range 3 mm to 5 mm.

4. An undercarriage according to claim 2 or claim 3, wherein the first plate (11) is made of metal and has thickness lying in the range 2 mm to 4 mm approximately.

5. An undercarriage according to claim 4, wherein the metal of the first plate (11) is an aluminum alloy.

6. An undercarriage according to any one of claims 2 to 5, wherein the second plate (12) is made of metal and has thickness lying in the range 1 mm to 4 mm approximately, and preferably in the range 1 mm to 2 mm.

7. An undercarriage according to claim 6, wherein the metal of the second plate (12) is an aluminum alloy.

8. An undercarriage according to claim 6, wherein the metal of the second plate (12) is a steel.

9. An undercarriage according to any preceding claim, wherein the electrical equipment is an electrical harness (3) .

10. An undercarriage according to any preceding claim, wherein the electrical equipment is an electromagnetic actuator (2) such as a gear motor.

11. An undercarriage according to any one of claims 2 to 8, wherein the fastener means include two side walls (13, 14) made of electrically conductive material that extend on either side of the electrical equipment (2, 3) at a distance therefrom and that are connected to the second plate (12).

12. An aircraft including a fuselage containing a cockpit provided with an electronic control unit, the fuselage being provided with at least one undercarriage according to any preceding claim, the electrical equipment of the undercarriage being connected to the electronic control unit.
